# EUROPÄISCHE PATENTSCHRIFT

(11) **EP 1 764 178 B1**
(45) Veröffentlichungstag und Bekanntmachung des Hinweises auf die Patenterteilung: **09.12.2009**
(21) Anmeldenummer: 06015634.6
(22) Anmeldetag: 27.07.2006
(51) Int. Cl.: B23K 1/00, B23P 15/26, F28D 9/00

(54) **Verfahren zur Herstellung eines Schichtwärmeübertragers und Schichtwärmeübertrager**
Process for manufacturing a stacked heat exchanger and stacked heat exchanger
Procédé de fabrication d'un échangeur de chaleur à empilage et échangeur de chaleur à empilage

(30) Priorität: 14.09.2005 DE 102005043733
(43) Veröffentlichungstag der Anmeldung: 21.03.2007
(73) Patentinhaber: Behr GmbH & Co. KG, 70469 Stuttgart (DE)
(72) Erfinder: Angermann, Hans-Heinrich, Dr.rer.nat., 70197 Stuttgart (DE); Damsohn, Herbert, Dr.-Ing., 73773 Aichwald (DE)
(74) Vertreter: Mantel, Berthold Friedrich

(56) Entgegenhaltungen:
- WO-A-97/28411
- JP-A- 6 003 076
- JP-A- 63 058 099
- US-A- 4 297 775
- US-A- 5 150 520
- US-A1- 2002 134 536

## Beschreibung

Die Erfindung betrifft ein Verfahren zur Herstellung eines Schichtwärmeübertragers nach dem Oberbegriff des Patentanspruches 1 sowie einen Schichtwärmeübertrager nach dem Oberbegriff des Patentanspruches 4 - jeweils bekannt durch die DE 103 28 274 A1 der Anmelderin.

Das bekannte Verfahren betrifft die Herstellung eines vorgeschweißten und lötgedichteten Schichtwärmeübertragers, welcher aus einem Schichtblock, bestehend aus konturierten Trennplatten, Lotschichten und Deckplatten, sowie aus Sammelkästen, welche mit dem Schichtblock stoffschlüssig verbunden sind, besteht. Das Verfahren umfasst mehrere Verfahrensschritte, nämlich das Stapeln des Schichtblockes, das Deponieren von Lot zwischen den Trenn- und Deckplatten gegebenenfalls schon während des Stapelns, das Fixieren des Schichtblockes, das Löten des Schichtblockes und das stoffschlüssige Verbinden der Sammelkästen mit dem Schichtblock. Nach einer zweiten Variante des bekannten Verfahrens wird der Schichtblock nach dem Stapeln vorgespannt und durch Schweißnähte in den Eckbereichen, d. h. entlang einer Kante des Schichtblockes und/oder durch Verschweißung der Sammelkästen mit den Deckplatten fixiert. Gleichzeitig werden die Sammelkästen durch die Eckschweißnähte mit dem Schichtblock verbunden. Die Sammelkästen konservieren die auf den Schichtblock aufgebrachte Vorspannung und wirken somit beim anschließenden Verlöten des Schichtwärmeübertragers als verlorene Lötvorrichtung. Problematisch bei dieser Hertellungsweise ist, dass das Lot, welches zwischen den Trennplatten des Schichtblockes deponiert ist, sei es in Form von Lotfolien oder einer Lotpaste, beim Schweißen der Ecknähte durch die Hitzewirkung mit aufgeschmolzen wird, sich in der Schweißzone befindet und/oder in diese eindringt, Insbesondere bei der Verwendung von Nickel-Basisloten wirken sich manche von deren Bestandteilen, zum Beispiel Nickel, Silizium oder Phospor, im Schweißnahtgefüge schädlich aus und können zu feinen Heißrissen in der Schweißnaht führen. Auch eine anschließende Verlötung - durch Füllen der Risse mit Lot - ist nicht immer hilfreich, da sich die Risse zum Teil innerhalb des Schweißnahtgefüges befinden. Die Risse in der Schweißnaht führen zu einer Festigkeitsminderung oder können Ausgangspunkt für einen Dauerbruch sein.

In der älteren Patentanmeldung mit dem Aktenzeichen 10 2004 041 309.6 der Anmelderin ist ein Verfahren zur Herstellung eines Mikrowärmeübertragers beschrieben, bei welchem sehr dünne Lotschichten, d. h. im Bereich von 1 bis 25 µm zwischen den Schichtblechen des Schichtblockes deponiert sind. Infolge des geringeren Lotangebots sinkt zwar der Anteil von Nickel-Lot in den Schweißnähten, jedoch kann sich immer noch so viel Nickel-Lot in der Schweißzone befinden, dass feine Haarrisse in der Schweißnaht auftreten können, wobei diese - wie erwähnt - auch im Inneren der Schweißnaht liegen können.

Die JP 63058099 A, die JP 6003076 A und die US 4297775 A offenbaren allesamt Verfahren zur Herstellung eines Wärmeübertragers aus geschichteten Trennplatten und Sammelkästen, aufweisend folgende Verfahrensschritte:
- Stapeln der Trennplatten zu einem Schichtblock
- Deponieren von Lot auf oder zwischen den Trennplatten
- Spannen des Stapels aus Trennplatten und Lot
- Mechanisches Fixieren des Schichtblocks durch Verschweißen und
- Löten des Schichtblocks,
- Wobei das Verschweißen in einer lotarmen Zone erfolgt.

Ausgehend von diesem Stand der Technik, ist es Aufgabe der vorliegenden Erfindung, ein Verfahren zur Herstellung eines Schichtwärmeübertragers nach der eingangs genannten Art dahingehend zu verbessern, dass eine Verschweißung mit höherer Festigkeit, insbesondere Schweißnähte ohne Heißrisse erzielbar sind. Es ist auch Aufgabe der Erfindung, einen Schichtwärmeübertrager der eingangs genannten Art derart zu gestalten, dass Schweißnähte mit höherer Festigkeit erreichbar sind.

Die Aufgabe der Erfindung wird zunächst durch ein Verfahren mit den Merkmalen des Patentanspruches 1 gelöst. Erfindungsgemäß ist vorgesehen, dass das Verschweißen, insbesondere das Legen der Eckschweißnähte in einer weitestgehend lotfreien Zone erfolgt, d. h. die Verschweißung fin in einem Eckbereich des Schichtblockes statt, wo sich kein Lot befindet und wohin auch kein Lot während des Schweißvorganges fließen kann. Damit wird verhindert, dass Lot in das Gefüge der Schweißnaht eindringt. Daraus ergibt sich der Vorteil, dass Schweißnähte ohne Heißrisse mit einem homogenen Gefüge und hoher Festigkeit erreicht werden. Vorteilhafterweise wird die lotfreie Zone dadurch erreicht, dass die Eckbereiche des Schichtblockes, in welchen die Eckschweißnähte gelegt werden, beim Deponieren von Lot ausgespart werden. Das Lot wird somit nur außerhalb der zu verschweißenden Eckbereiche deponiert, sei es in Form von Lotfolien, Lotpaste oder anderweitig aufgebrachten Lotschichten. Gleichzeitig wird der Wärmeeintrag bei der Verschweißung derart gesteuert, dass in der Nähe der Schweißnaht befindliches Lot nicht aufgeschmolzen wird.

Die Aufgabe der Erfindung wird auch durch einen Schichtwärmeübertrager mit den Merkmalen des Patentanspruches 4 gelöst. Erfindungsgemäß ist vorgesehen, dass die zwischen den Trennplatten angeordneten Lotschichten in den zu verschweißenden Eckbereichen ausgespart sind und eine Begrenzungslinie aufweisen, welche zu den Schweißnähten einen Mindestabstand a einhält. Damit wird der Vorteil erreicht, dass einerseits die Verschweißung der Trennplatten und der Sammelkästen frei von schädlichen Lotbeimengungen erfolgt und andererseits eine gasdichte Verlötung des Schichtblockes nach dem Schweißen erfolgen kann. Vorzugsweise orientiert sich die geometrische Form der Aussparung zumindest grob an der Tiefe und Breite der Schweißnaht, und zwar in der Weise, dass die Lotschicht, z. B. eine Lotfolie einerseits weit genug ausgespart ist, damit sie beim Schweißen nicht aufgeschmolzen und so kein Lotfolienmaterial in die Schweißnaht eingebracht wird, andererseits aber nahe genug an der Schweißnaht liegt, so dass der Wärmeübertrager gasdicht ist, d. h., dass der zwischen Schweißnaht und dem vorderen Ende (der Front) des flüssigen Lotes liegende Spalt durch von der Kapillarkraft getriebenes, nachfließendes Lot geschlossen werden kann.

Nach einer vorteilhaften Ausgestaltung der Erfindung ist der Mindestabstand a größer als Null, jedoch kleiner als oder gleich 10 mm. Nach einer bevorzugten Ausführungsform beträgt der Mindestabstand a weniger oder gleich 2 mm, und besonders bevorzugt ist der Mindestabstand a gleich oder kleiner als 1 mm. Die Grenze der Schweißnaht ist durch die Grenze zwischen aufgeschmolzenem Material (Grundwerkstoff der Trennplatten) und gerade nicht mehr aufgeschmolzenem Material definiert (in einem metallographischen Schliff weist die Schweißnaht eine charakteristische Gussstruktur, der nicht aufgeschmolzene Grundwerkstoff dagegen nach wie vor eine polykristalline Struktur auf).

Nach einer vorteilhaften Ausgestaltung der Erfindung sind die Trenn- und Deckplatten des Schichtblockes rechteckförmig oder quadratisch ausgebildet, wobei zwischen den Trennblechen Lotfolien mit ausgesparten bzw. abgeschnittenen Eckbereichen angeordnet sind. Die Begrenzungslinie der Lotfolien gegenüber den Eckschweißnähten wird beispielsweise durch eine Gerade gebildet, so dass der Mindestabstand a jeweils der Abstand zwischen einem Scheitelpunkt der Schweißnaht und der Begrenzungslinie ist. Vorteilhaft bei diesen abgeschnittenen Ecken ist die einfache Herstellung, z. B. durch einen geraden Stanzschnitt einer Lotfolie.

Nach einer weiteren vorteilhaften Ausgestaltung der Erfindung besteht die Begrenzungslinie aus zwei sich vorzugsweise rechtwinklig schneidenden Geraden, so dass die ausgesparte lotfreie Zone die Form eines Rechteckes oder Quadrates aufweist, in welchem die Eckschweißnähte angeordnet sind. Diese geometrische Form hat den Vorteil, dass die maximale Fließlänge wesentlich geringer als bei der dreieckförmigen Aussparung ist.

Nach einer weiteren vorteilhaften Ausgestaltung der Erfindung ist die Begrenzungslinie als Kreisbogen ausgebildet, welche im Mindestabstand a zu den Scheitelpunkten der Schweißnähte verläuft - die lotschichtfreie ausgesparte Zone hat somit etwa die Form eines Kreisquadranten. Dies hat den Vorteil, dass sowohl die maximale Fließlänge als auch der Mindestabstand a klein gehalten werden können und dass gleichzeitig die Fertigungskosten gering gehalten werden, da es sich im Prinzip um einen einfachen Lochstanzvorgang handelt. Die Lage des Mittelpunktes des Kreises kann an die jeweiligen Bedingungen optimal angepasst werden.

Nach einer weiteren vorteilhaften Ausgestaltung der Erfindung ist die Begrenzungslinie als Mehrfachbogen ausgebildet, welcher der Kontur der Schweißnähte im Mindestabstand a folgt. Vorteilhaft hierbei ist, dass die maximale Fließlänge und der Mindestabstand sehr klein sind und trotzdem viel Fläche durch Lotfolie abgedeckt ist. Dies gewährleistet einerseits eine nicht verunreinigte Schweißnaht und andererseits eine gasdichte Lötung des Schichtblockes.

Die Lotschicht kann in verschiedenen Formen zwischen den Trennplatten deponiert werden, beispielsweise als Lotfolie, die zwischen die Trennplatten gelegt wird, oder als Lotpaste, welche auf die Trennplatten aufgetragen wird. Möglich ist auch eine Aufbringung von Lotpaste oder eine chemische und/oder galvanische Vernickelung oder eine Lotaufbringung durch thermisches Spritzen, wobei die Eckbereiche nicht mit Lot belegt, sondem abgedeckt, abgewischt oder abgeschliffen werden - d. h. das Lot wird nach dem Beloten von den Eckbereichen wieder entfernt.

Bei Verwendung von Lotfolien oder vorbeloteten Trennblechen können die Verfahrensschritte des Stapelns des Schichtblockes und des Deponierens von Lot zwischen den Trenn- und Deckplatten gleichzeitig vorgenommen werden, beispielsweise indem die Trenn- beziehungsweise Deckplatten und die Lotfolien abwechselnd gestapelt werden.

Ausführungsbeispiele der Erfindung sind in der Zeichnung dargestellt und werden im Folgenden näher erläutert. Es zeigen
- Fig. 1: einen Ausschnitt eines Schichtwärmeübertragers mit einer geradlinig abgeschnittenen Lotfolie,
- Fig. 2: ein zweites Ausführungsbeispiel der Erfindung mit rechtwinklig ausgesparter Lotfolie,
- Fig. 3: ein drittes Ausführungsbeispiel der Erfindung mit kreisbogenförmig ausgesparter Lotfolie und
- Fig. 4: ein viertes Ausführungsbeispiel der Erfindung mit einer Aussparung, welche einen Doppelbogen bildet.

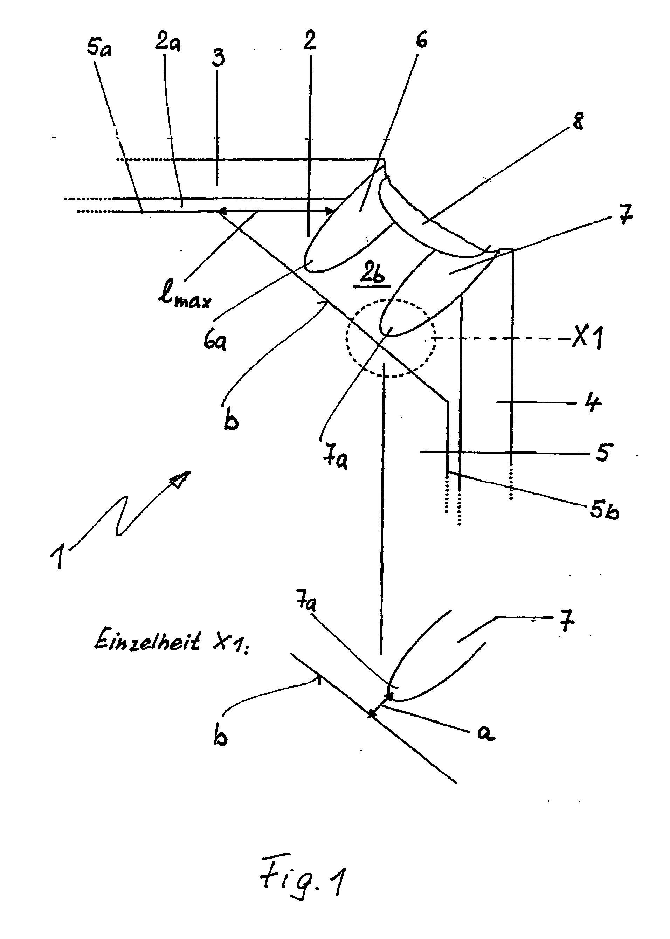

**Fig. 1** zeigt einen Eckausschnitt eines Schichtwärmeübertragers 1, welcher einen Schichtblock 2 und seitliche Sammelkästen 3, 4 aufweist - sowie zwei weitere nicht dargestellte Sammelkästen. Der Schichtwärmeübertrager 1 entspricht grundsätzlich dem Schichtwärmeübertrager gemäß der eingangs genannten DE 103 28 274 A1. Der Schichtblock 2 ist somit aus einzelnen übereinander angeordneten Blechen bzw. Trennblechen 2a aufgebaut, welche hier quadratisch ausgebildet sind und mit ihren Kanten bis an die Sammelkästen 3, 4 heranreichen. Zwischen den Trennblechen 2a sind Lotfolien 5 angeordnet, welche mit ihren Kanten 5a, 5b gegenüber den Kanten der Trennbleche 2a nach innen versetzt sind. Der Eckbereich der Lotfolie 5 ist durch eine Gerade, eine Begrenzungslinie b abgeschnitten, so dass ein dreieckförmiger Eckbereich 2b entsteht, der nicht mit der Lotfolie 5 bedeckt ist. Dieser Eckbereich 2b wird als lotfreie Zone bezeichnet. In dem Eckbereich 2b sind zwei etwa parallel ausgerichtete Schweißnähte, eine linke Schweißnaht 6 und eine rechte Schweißnaht 7 angeordnet, welche durch eine etwa quer verlaufende Eckschweißnaht 8 miteinander verbunden sind. Die drei Schweißnähte 6, 7, 8 verbinden einerseits die Trennbleche 2a miteinander (senkrecht zur Zeichenebene) und die Sammelkästen 3, 4 mit dem Schichtblock 2. Die Schweiß- bzw. Ecknähte 6, 7, 8 verlaufen also ebenfalls senkrecht zur Zeichenebene. Die linke und die rechte Schweißnaht 6, 7 sind in der zeichnerischen Darstellung etwa ellipsenförmig ausgebildet und weisen jeweils einen Scheitelpunkt 6a, 7a auf, welche zur Begrenzungslinie b einen Mindestabstand a (vgl. Einzelheit X1) aufweisen. Der Mindestabstand a ist so gewählt, dass beim Legen der Schweißnähte 6, 7 kein Lot der Lotfolien 5 in die Schweißnähte 6, 7 eintritt. Damit wird insbesondere vermieden, dass Lot, z. B. Ni-Basislot, Cu-Lot etc. in das Schweißnahtgefüge eindringt und dort zu Heißrissen führt, was eine Schwächung der Schweißnaht oder gar Undichtheit des Wärmeübertragers zur Folge hätte.

Was die Herstellung des Schichtwärmeübertragers 1 betrifft, so wird auf die in den Offenbarungsgehalt einbezogene DE 103 28 274 A1, zweite Verfahrensvariante, verwiesen: demnach wird der Schichtblock 1 mit den Lotfolien 5 vorgespannt und durch Schweißnähte in den Eckbereichen fixiert, womit auch die Sammelkästen - als verlorene Lötvorrichtung - mit dem Schichtblock 2 verbunden werden. Während dieses Schweißvorganges ist durch Einhaltung des Mindestabstandes a sichergestellt, dass kein Lot der Lotfolie aufgeschmolzen wird und in die Schweißzone der Schweißnähte 6, 7, 8 gelangt. Letztere bleiben somit frei von unerwünschten, festigkeitsmindernden Verunreinigungen. Nach dem Schweißen wird der gesamte Schichtwärmeübertrager in einen nicht dargestellten Lötofen verbracht und dicht gelötet. Da die Löttemperatur unterhalb der Schweißtemperatur liegt, wird nur das Lot der Lotfolien 5 aufgeschmolzen; es verteilt sich aufgrund der zwischen den Trennplatten 2a herrschenden Kapillarkräfte und fließt auch in den Eckbereich 2b, d. h. beiderseits der linken und rechten Schweißnaht 6, 7. In der Zeichnung ist durch einen Pfeil Iₘₐₓ die so genannte maximale Fließlänge des Lotes dargestellt, d. h. die Strecke die das Lot während des Lötprozesses im aufgeschmolzenen Zustand zurückzulegen hat, um an die Schweißnaht 6 stofflich anzuschließen. Diese Strecke muss vom Lot überbrückt werden, damit eine gasdichte Verlötung des Schichtblockes 2 erreicht wird. Daher muss sich die Aussparung, d. h. der Verlauf der Begrenzungslinie b an der maximalen Fließlänge orientieren, welche durch das Lotangebot und die Kapillarkräfte des freien Spaltes zwischen den Trennblechen 2a bestimmt wird.

Der Mindestabstand a - dargestellt als Einzelheit X1 - ist vorzugsweise größer als Null (a > 0), um die Risiken der Loteinbringung in die Schmelze sicher auszuschließen. Die Grenze der Schweißnähte 6, 7 ergibt sich dabei durch die unterschiedlichen Gefüge der Schweißnaht, welche eine Gussstruktur aufweist, und gerade nicht aufgeschmolzenen Grundwerkstoff des Trennbleches 2a, welches eine polykristalline Struktur aufweist. Um die maximale Fließlänge Iₘₐₓ nicht zu groß werden zu lassen, sollte der Mindestabstand a 5 mm nicht überschreiten, insbesondere sollte er kleiner als oder gleich 2 mm oder besonders bevorzugt kleiner als oder gleich 1 mm sein. Ein gewisser Mindestabstand ist insofern empfehlenswert, als die Schweißnaht 6, 7 in ihren geometrischen Abmessungen insbesondere auch von Schweißung zu Schweißung schwanken kann. Abweichend von dem dargestellten Ausführungsbeispiel können die drei Schweißnähte 6, 7, 8 auch durch eine einzige Eckschweißnaht ersetzt werden, wobei das oben Gesagte bezüglich der maximalen Fließlänge auch hier gilt: das Lot muss während des Lötvorganges stofflich an die Schweißnaht anschließen, um die Gasdichtheit des Schichtblockes zu gewährleisten.

Es ist allerdings auch klar, dass in Abhängigkeit vom verwendeten Werkstoff und Lot der Mindestabstand a gegebenenfalls auch gleich oder kleiner als Null (a ≤ 0) sein kann, d. h., die in die Schweißschmelze eingebrachte Lotmenge muss lediglich so gering sein, dass keine Risse entstehen. Eventuell kann sogar eine geringe Rissbildung toleriert werden, wenn die im Einsatz auf das Bauteil aufgebrachte mechanische Belastung eher gering ist. Eine geringere Aussparung von Lot, d. h. a ≤ 0 - Schaffung einer lotarmen Zone - bringt allerdings kosten- und fertigungstechnisch keine Vorteile, solange die Lotmenge, die in die Schweißzone gelangen kann, überhaupt reduziert wird.

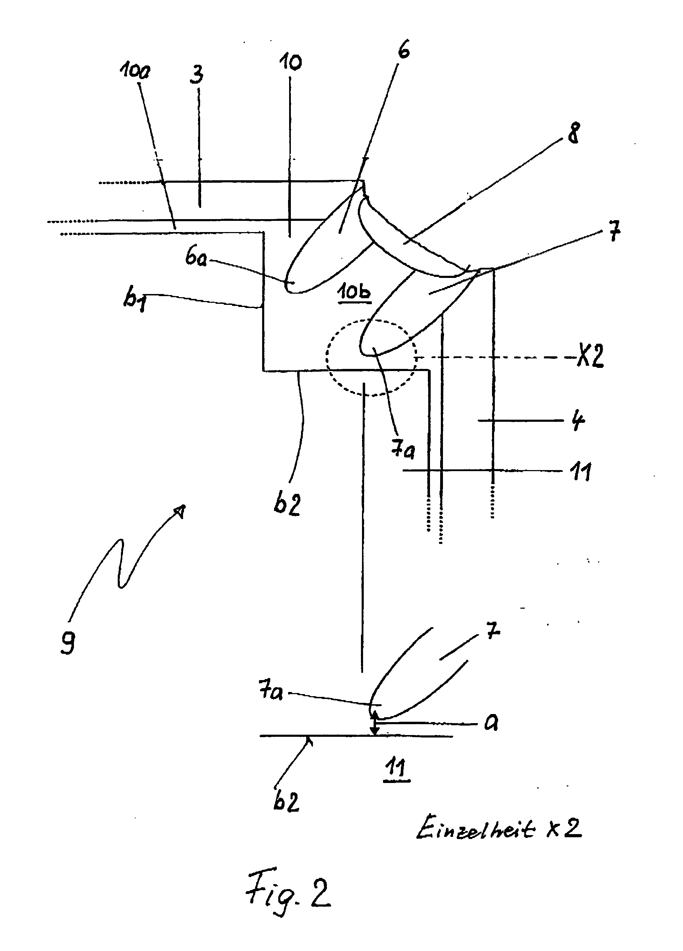

**Fig. 2** zeigt ein weiteres Ausführungsbeispiel der Erfindung mit einem ähnlich aufgebauten Schichtwärmeübertrager 9, einem Schichtblock 10, Sammelkästen 3, 4 und Schweißnähten 6, 7, 8, wobei für gleiche Teile gleiche Bezugszahlen wie in Fig. 1 verwendet werden. Der Schichtblock 10 weist Lotfolien 11 auf, bei welchen ein etwa quadratischer Eckbereich 10b durch eine rechtwinklig verlaufende Begrenzungslinie b1, b2 ausgespart ist. Die winklige Aussparung wird vorzugsweise durch Stanzen oder Schneiden der Lotfolien 11 hergestellt. Der Mindestabstand a ist als Einzelheit X2 dargestellt, und zwar als Abstand a zwischen dem Scheitel 7a der Schweißnaht 7 und der Begrenzungslinie b2. Entsprechend ist der nicht dargestellte Mindestabstand a zwischen dem Scheitel 6a und der Begrenzungslinie b1 gewählt. Diese geometrische Form hat den Vorteil, dass die maximale Fließlänge Iₘₐₓ wesentlich geringer ist als bei der dreieckförmigen Aussparung 2b gemäß Fig. 1.

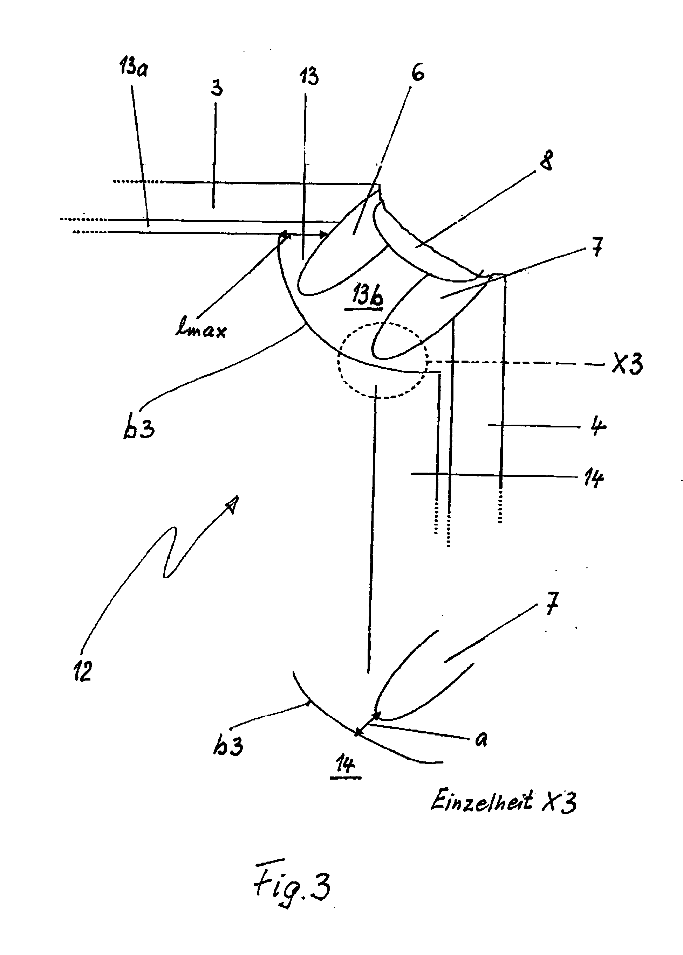

**Fig. 3** zeigt ein drittes Ausführungsbeispiel der Erfindung für einen Schichtwärmeübertrager 12 mit einem Schichtblock 13 und ausgespartem Eckbereich 13a, in welchem die Schweißnähte 6, 7, 8 angeordnet sind. Die Sammelkästen 3, 4 entsprechen den vorherigen Ausführungsformen gemäß Fig. 1 und 2. Zwischen den Trennblechen 13a des Schichtblockes 13 sind Lotfolien 14 angeordnet mit einer kreisbogenförmigen Begrenzungslinie b3, welche eine Aussparung in Form eines Kreisquadranten bildet. Der Mindestabstand a zwischen den Schweißnähten 6, 7 ist als Einzelheit X3 dargestellt. Die maximale Fließlänge ist durch einen Pfeil Iₘₐₓ dargestellt. Die beiden Werte Fließlänge und Mindestabstand können bei dieser Variante beide recht kleine Werte annehmen. Die kreisbogenförmige Aussparung gemäß kreisförmiger Begrenzungslinie b3 kann durch einen einfachen Lochstanzvorgang hergestellt werden, wobei die Lage des Mittelpunktes variabel ist.

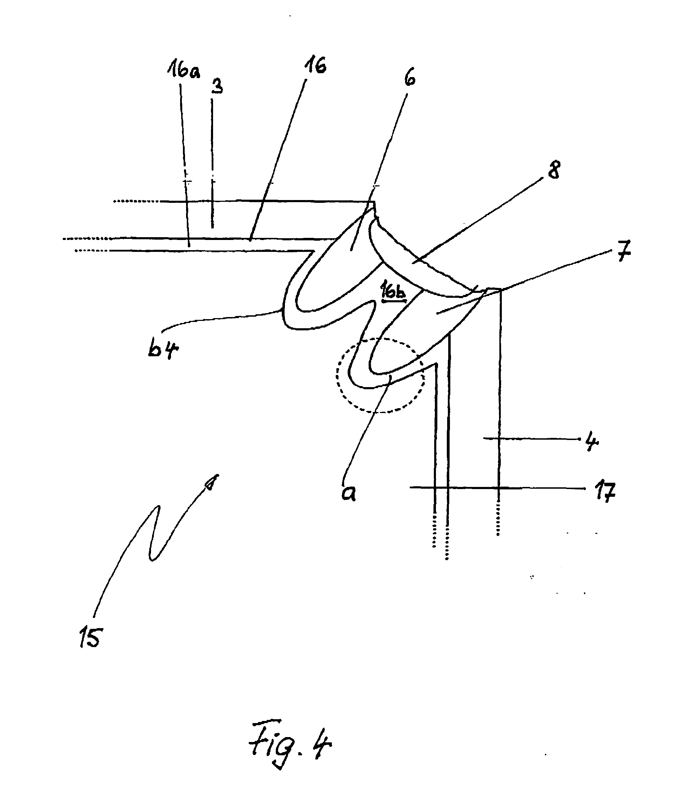

**Fig. 4** zeigt ein viertes Ausführungsbeispiel der Erfindung mit einem Schichtwärmeübertrager 15, einem Schichtblock 16 und Lotfolien 17, welche eine Aussparung 16b in Form eines Doppelbogens aufweist, welcher durch eine Begrenzungslinie b4 gebildet wird, welche etwa der Kontur der beiden Schweißnähte 6, 7 im Abstand a folgt. Mit dieser Form der Aussparung 16b wird einerseits ein geringer Mindestabstand a und andererseits eine Minimierung der maximalen Fließlänge erreicht, wobei gleichzeitig eine relativ große Fläche mit Lotfolie bedeckt ist. Dies begünstigt insbesondere eine gasdichte Verlötung des Schichtblockes 16.

Abweichend von den dargestellten Ausführungsbeispielen gemäß Fig. 1 bis 4 kann die Lotfolie durch eine Lotbeschichtung ersetzt werden. Dabei kann die Lotschicht als Lotpaste aufgebracht werden oder chemisch und/oder galvanisch auf den Trennplatten abgeschieden werden. Die auszusparenden Eckbereiche können dabei entweder abgedeckt werden, oder die Lotschicht wird nach der Aufbringung durch geeignete Mittel entfernt.

Der oben beschriebene Schichtwärmeübertrager wird vorzugsweise aus Edelstahl für die Trennbleche und die Sammelkästen hergestellt, wobei vorzugsweise Nickel-Basislot oder auch Kupfer als Lot eingesetzt wird. Die Abmessungen des Schichtwärmeübertragers bewegen sich bei einer bevorzugten Ausführungsform im Bereich von 50 bis 100 mm.

## Patentansprüche

1. Verfahren zur Herstellung eines Schichtwärmeübertragers (1, 9, 12, 15), der im Wesentlichen aus aufeinander geschichteten Trennplatten sowie Sammelkästen (3, 4) aufgebaut ist, bestehend aus den Verfahrensschritten
a) Stapeln der Trennplatten zu einem Schichtblock (2, 10, 13, 16),
b) Deponieren von Lot auf oder zwischen den Trennplatten,
c) Spannen des Stapels aus Trennplatten und Lot,
d) mechanisches Fixieren des Schichtblockes (2, 10, 13, 16) durch Verschweißen und
e) Löten des Schichtblockes (2,10,13,16),
wobei die Verfahrensschritte a) und b) gleichzeitig erfolgen,
wobei das Verschweißen in einer lotarmen Zone (2b, 10b, 13b, 16b) erfolgt, **dadurch gekennzeichnet, dass** das Verschweißen in den Eckbereichen des Schichtblockes (2, 10, 13, 16) erfolgt und dass die Eckbereiche (2b, 10b, 13b, 16b) beim Deponieren von Lot hinreichend ausgespart werden.

2. Verfahren zur Herstellung eines Schichtwärmeübertragers (1, 9, 12, 15), der im Wesentlichen aus aufeinander geschichteten Trennplatten sowie Sammelkästen (3, 4) aufgebaut ist, bestehend aus den Verfahrensschritten
a) Stapeln der Trennplatten zu einem Schichtblock (2, 10, 13, 16),
b) Deponieren von Lot auf oder zwischen den Trennplatten,
c) Spannen des Stapels aus Trennplatten und Lot,
d) mechanisches Fixieren des Schichtblockes (2, 10, 13, 16) durch Verschweißen und
e) Löten des Schichtblockes (2, 10, 13, 16),
wobei das Verschweißen in einer lotfreien Zone (2b, 10b, 13b, 16b) erfolgt, **dadurch gekennzeichnet, dass** das Verschweißen in den Eckbereichen des Schichtblockes (2, 10, 13, 16) erfolgt und dass die Eckbereiche (2b, 10b, 13b, 16b) beim Deponieren von Lot ausgespart werden.

3. Verfahren nach Anspruch 1 oder 2, **dadurch gekennzeichnet, dass** beim Verschweißen mindestens eine Schweißnaht (6, 7, 8) pro Eckbereich gelegt wird, durch welche die Sammelkästen (3, 4) und die Trennplatten (2a, 10a, 13a, 16a) verbunden werden, und dass der Wärmeeintrag durch den Schweißvorgang derart gesteuert wird, dass ein Eindringen von Lot in den Bereich der Schweißnaht hinreichend unterbunden bzw. vollständig unterbunden wird.

4. Wärmeübertrager, insbesondere Schichtwärmeübertrager, bestehend aus einem Schichtblock (2,10,13,16) mit Trennplatten (2a, 10a, 13,a, 16a) sowie aus mit dem Schichtblock (2, 10, 13, 16) stoffschlüssig verbundenen Sammelkästen (3, 4), insbesondere hergestellt nach dem Verfahren gemäß einem der Ansprüche 1 bis 3, **dadurch gekennzeichnet, dass** zwischen den Trennplatten (2a, 10a, 13a, 16a) Lotschichten (5, 11, 14, 17) deponierbar sind, dass der Schichtblock (2, 10, 13, 16) Eckbereiche (2b, 10b, 13b, 16b) aufweist, in welchen mindestens eine Schweißnaht (6, 7, 8) zur Verbindung der Trennplatten und der Sammelkästen angeordnet ist, und dass die Lotschichten (5, 11, 14, 17) in den Eckbereichen derart ausgespart sind, dass zwischen einer Begrenzungslinie (b; b1, b2; b3; b4) der Lotschicht und der Kontur der mindestens einen Schweißnaht (6, 7, 8) ein Mindestabstand a belassen ist.

5. Wärmeübertrager nach Anspruch 4, **dadurch gekennzeichnet, dass** der Mindestabstand a größer als Null und kleiner als oder gleich 10 mm ist (0 < a ≤ 10 mm).

6. Wärmeübertrager nach Anspruch 5, **dadurch gekennzeichnet, dass** der Mindestabstand a kleiner als oder gleich 2 mm (a ≤ 2 mm), vorzugsweise kleiner als oder gleich 1 mm ist (a ≤ 1 mm).

7. Wärmeübertrager nach einem der Ansprüche 4 bis 6, **dadurch gekennzeichnet, dass** die Begrenzungslinie der Lotschicht (5) als Gerade (b) ausgebildet ist, die mit den Konturen der mindestens einen Schweißnaht (6, 7) den Mindestabstand (a) bildet.

8. Wärmeübertrager nach einem der Ansprüche 4 bis 6, **dadurch gekennzeichnet, dass** die Begrenzungslinie der Lotschicht (11) durch zwei sich vorzugsweise rechtwinklig schneidende Geraden (b1, b2) gebildet wird.

9. Wärmeübertrager nach einem der Ansprüche 4 bis 6, **dadurch gekennzeichnet, dass** die Begrenzungslinie der Lotschicht (14) als Bogen-, insbesondere als Kreisbogen (b3) ausgebildet ist.

10. Wärmeübertrager nach einem der Ansprüche 4 bis 6, **dadurch gekennzeichnet, dass** die Begrenzungslinie der Lotschicht (17) als Mehrfachbogen (b4) ausgebildet ist, welcher etwa parallel und im Mindestabstand (a) zu den Konturen der Schweißnähte (6, 7) verläuft.

11. Wärmeübertrager nach einem der Ansprüche 4 bis 10, **dadurch gekennzeichnet, dass** die Lotschicht als Lotfolie (5, 11, 14, 17) ausgebildet ist.

12. Wärmeübertrager nach Anspruch 11, **dadurch gekennzeichnet, dass** die Begrenzungslinie (b; b1, b2; b3; b4) durch Stanzen der Lotfolien herstellbar ist.

13. Wärmeübertrager nach einem der Ansprüche 4 bis 12, **dadurch gekennzeichnet, dass** die Lotschicht als Lotpaste auftragbar ist.

## Claims

1. Method for manufacturing a stacked heat exchanger (1, 9, 12, 15) essentially constructed of stacked separators and headers (3, 4), comprising the following process steps:
a) the stacking of the separators to form a stacked block (2, 10, 13, 16),
b) the deposition of solder on or between the separators,
c) the clamping of the stack of separators and solder,
d) the mechanical fixing of the stacked block (2, 10, 13, 16) by welding, and
e) the soldering of the stacked block (2, 10, 13, 16),
wherein the process steps a) and b) run concurrently,
wherein the welding is carried out in a low-solder zone (2b, 10b, 13b, 16b), **characterised in that** the welding is carried out in the corner regions of the stacked block (2, 10, 13, 16) and **in that** the corner regions (2b, 10b, 13b, 16b) are sufficiently blocked out when the solder is deposited.

2. Method for manufacturing a stacked heat exchanger (1, 9,12, 15) essentially constructed of stacked separators and headers (3, 4), comprising the following process steps:
a) the stacking of the separators to form a stacked block (2, 10, 13,16),
b) the deposition of solder on or between the separators,
c) the clamping of the stack of separators and solder,
d) the mechanical fixing of the stacked block (2, 10, 13, 16) by welding, and
e) the soldering of the stacked block (2, 10, 13, 16),
wherein the welding is carried out in a solder-free zone (2b, 10b, 13b, 16b), **characterised in that** the welding is carried out in the corner regions of the stacked block (2, 10, 13, 16) and **in that** the corner regions (2b, 10b, 13b, 16b) are blocked out when the solder is deposited.

3. Method according to claim 1 or 2, **characterised in that** at least one weld (6, 7, 8) is produced for each corner region in the welding process, whereby the headers (3, 4) and the separators (2a, 10a, 13a, 16a) are joined, and **in that** the heat input is controlled by the welding process in such a way that a penetration of solder into the region of the weld is sufficiently or completely prevented.

4. Heat exchanger, in particular stacked heat exchanger, comprising a stacked block (2, 10, 13, 16) with separators (2a, 10a, 13a, 16a) and with headers (3, 4) positively joined to the stacked block (2, 10, 13, 16), in particular manufactured using the method according to any of claims 1 to 3, **characterised in that** solder layers (5, 11, 14, 17) can be deposited between the separators (2a, 10a, 13a, 16a), **in that** the stacked block (2, 10, 13, 16) has corner regions (2b, 10b, 13b, 16b) where at least one weld (6, 7, 8) is provided to join the separators and the headers, and **in that** the solder layers (5, 11, 14, 17) are blocked out in the corner regions in such a way that a minimum distance a is left between a boundary line (b; b1, b2; b3; b4) of the solder layer and the contour of the at least one weld (6, 7, 8).

5. Heat exchanger according to claim 4, **characterised in that** the minimum distance a is more than zero and less than or equal to 10 mm (0 < a ≤ 10 mm).

6. Heat exchanger according to claim 5, **characterised in that** the minimum distance a is less than or equal to 2 mm (a ≤ 2 mm), preferably less than or equal to 1 mm (a ≤ 1 mm).

7. Heat exchanger according to any of claims 4 to 6, **characterised in that** the boundary line of the solder layer (5) is a straight line (b) forming the minimum distance (a) with the contours of the at least one weld (6, 7).

8. Heat exchanger according to any of claims 4 to 6, **characterised in that** the boundary line of the solder layer (11) is represented by two straight lines (b1, b2) which preferably intersect at right angles.

9. Heat exchanger according to any of claims 4 to 6, **characterised in that** the boundary line of the solder layer (14) is an arc, in particular a circular arc (b3).

10. Heat exchanger according to any of claims 4 to 6, **characterised in that** the boundary line of the solder layer (17) is a multiple arc (b4) running approximately parallel to and at the minimum distance (a) from the contours of the welds (6, 7).

11. Heat exchanger according to any of claims 4 to 10, **characterised in that** the solder layer is designed as a solder foil (5, 11, 14, 17).

12. Heat exchanger according to claim 11, **characterised in that** the boundary line (b; b1, b2; b3; b4) can be produced by punching the solder foils.

13. Heat exchanger according to any of claims 4 to 12, **characterised in that** the solder layer can be applied as a solder paste.

## Revendications

1. Procédé de fabrication d'un échangeur de chaleur (1, 9, 12, 15), du type à empilage, qui est constitué essentiellement de plaques de séparation empilées les unes sur les autres, ainsi que de bacs collecteurs (3, 4), procédé se composant des étapes consistant :
a) à empiler les plaques de séparation pour former un bloc à empilage (2, 10, 13, 16),
b) à déposer un métal d'apport de brasage sur ou entre les plaques de séparation,
c) à serrer la pile constituée de plaques de séparation et de métal d'apport de brasage,
d) à fixer mécaniquement, par soudage, le bloc à empilage (2, 10, 13, 16), et
e) à braser le bloc à empilage (2, 10, 13, 16),
où les étapes a) et b) du procédé sont réalisées en même temps,
où le soudage est réalisé dans une zone (2b, 10b, 13b, 16b) comportant peu de métal d'apport de brasage,
**caractérisé en ce que** le soudage est réalisé dans les zones angulaires du bloc à empilage (2, 10, 13, 16) et **en ce que** les zones angulaires (2b, 10b, 13b, 16b) sont suffisamment évidées lors du dépôt du métal d'apport de brasage.

2. Procédé de fabrication d'un échangeur de chaleur (1, 9, 12, 15), du type à empilage, qui est constitué essentiellement de plaques de séparation empilées les unes sur les autres, ainsi que de bacs collecteurs (3, 4), procédé se composant des étapes consistant :
a) à empiler les plaques de séparation pour former un bloc à empilage (2, 10, 13, 16),
b) à déposer un métal d'apport de brasage sur ou entre les plaques de séparation,
c) à serrer la pile constituée de plaques de séparation et de métal d'apport de brasage,
d) à fixer mécaniquement, par soudage, le bloc à empilage (2, 10, 13, 16), et
e) à braser le bloc à empilage (2, 10, 13, 16),
où le soudage est réalisé dans une zone (2b, 10b, 13b, 16b) ne comportant pas de métal d'apport de brasage,
**caractérisé en ce que** le soudage est réalisé dans les zones angulaires du bloc à empilage (2, 10, 13, 16) et **en ce que** les zones angulaires (2b, 10b, 13b, 16b) sont évidées lors du dépôt du métal d'apport de brasage.

3. Procédé selon la revendication 1 ou 2, **caractérisé en ce que**, au cours du soudage, au moins un cordon de soudure (6, 7, 8) est appliqué pour chaque zone angulaire, cordon de soudure par lequel sont assemblés les bacs collecteurs (3, 4) et les plaques de séparation (2a, 10a, 13a, 16a), et **en ce que** l'entrée de chaleur, sous l'effet du processus de soudure, est régulée de manière telle, qu'une pénétration de métal d'apport de brasage, dans la zone du cordon de soudure, soit empêchée de façon suffisante ou totale.

4. Echangeur de chaleur, en particulier échangeur de chaleur du type à empilage, se composant d'un bloc à empilage (2, 10, 13, 16) comportant des plaques de séparation (2a, 10a, 13a, 16a) ainsi que des bacs collecteurs (3, 4) assemblés, par liaison de matière, avec le bloc à empilage (2, 10, 13, 16), ledit échangeur de chaleur étant fabriqué en particulier selon le procédé conformément à l'une quelconque des revendications 1 à 3, **caractérisé en ce que** des couches de métal d'apport de brasage (5, 11, 14, 17) peuvent être déposées entre les plaques de séparation (2a, 10a, 13a, 16a), **en ce que** le bloc à empilage (2, 10, 13, 16) présente des zones angulaires (2b, 10b, 13b, 16b) dans lesquelles est disposé au moins un cordon de soudure (6, 7, 8) servant à l'assemblage des plaques de séparation et des bacs collecteurs, et **en ce que** les couches de métal d'apport de brasage (5, 11, 14, 17) sont réservées dans les zones angulaires, de manière telle qu'un intervalle minimum (a) soit laissé entre une ligne de délimitation (b ; b1, b2 ; b3 ; b4) de la couche de métal d'apport de brasage et le contour du cordon de soudure (6, 7, 8) au moins au nombre de un.

5. Echangeur de chaleur selon la revendication 4, **caractérisé en ce que** l'intervalle minimum (a) est supérieur à zéro et inférieur ou égal à 10 mm (0 < a ≤ 10 mm).

6. Echangeur de chaleur selon la revendication 5, **caractérisé en ce que** l'intervalle minimum (a) est inférieur ou égal à 2 mm (a ≤ 2mm), de préférence inférieur ou égal à 1 mm (a ≤ 1 min).

7. Echangeur de chaleur selon l'une quelconque des revendications 4 à 6, **caractérisé en ce que** la ligne de délimitation de la couche de métal d'apport de brasage (5) est configurée comme une droite (b) qui, avec les contours du cordon de soudure (6, 7) au moins au nombre de un, forme l'intervalle minimum (a).

8. Echangeur de chaleur selon l'une quelconque des revendications 4 à 6, **caractérisé en ce que** la ligne de délimitation de la couche de métal d'apport de brasage (11) est formée par deux droites (b1, b2) se coupant de préférence à angle droit.

9. Echangeur de chaleur selon l'une quelconque des revendications 4 à 6, **caractérisé en ce que** la ligne de délimitation de la couche de métal d'apport de brasage (14) est configurée comme un arc, en particulier comme un arc de cercle (b3).

10. Echangeur de chaleur selon l'une quelconque des revendications 4 à 6, **caractérisé en ce que** la ligne de délimitation de la couche de métal d'apport de brasage (17) est configurée comme un arc multiple (b4) qui s'étend à peu près parallèlement aux contours des cordons de soudure (6, 7) et suivant l'intervalle minimum (a) par rapport auxdits contours des cordons de soudure.

11. Echangeur de chaleur selon l'une quelconque des revendications 4 à 10, **caractérisé en ce que** la couche de métal d'apport de brasage est configurée comme une feuille de métal d'apport de brasage (5, 11, 14, 17).

12. Echangeur de chaleur selon la revendication 11, **caractérisé en ce que** la ligne de délimitation (b ; b1, b2 ; b3 ; b4) peut être réalisée par découpe des feuilles de métal d'apport de brasage.

13. Echangeur de chaleur selon l'une quelconque des revendications 4 à 12, **caractérisé en ce que** la couche de métal d'apport de brasage peut être appliquée comme une pâte à braser.
